# EUROPEAN PATENT SPECIFICATION

(11) **EP 2 965 022 B1**
(45) Date of publication and mention of the grant of the patent: **24.04.2019**
(21) Application number: 14716441.2
(22) Date of filing: 03.03.2014
(51) Int. Cl.: F24H 1/28, F24H 8/00, F24H 9/00, F24H 9/12, F24H 9/14

(54) **FIRED HEAT EXCHANGER**
WÄRMETAUSCHER
ÉCHANGEUR DE CHALEUR

(30) Priority: 09.03.2013 PL 40307413
(43) Date of publication of application: 13.01.2016
(73) Proprietor: AIC Spólka Akcyjna, 81-577 Gdynia (PL)
(72) Inventor: SIEMIENCZUK, Tomasz, PL-80-351 Gdansk (PL)
(74) Representative: Pomianek, Grazyna
(86) International application number: PCT/PL2014/000017
(87) International publication number: WO 2014/142688

(56) References cited:
- EP-A2- 1 972 863
- EP-A2- 2 437 022
- WO-A1-2006/111317
- WO-A1-2012/158050
- CH-A- 491 335

## Description

The invention concerns a fired heat exchanger applied in central heating and domestic water installations.

Known are heat exchangers equipped with a system of pipe elements which transfer hot fumes and are fitted in between two sieve walls inside a chamber enclosed in an outer jacket. Heated water circulating inside the chamber is supplied via an inlet stub pipe in the bottom section of the outer jacket, and discharged via an outlet stub pipe in the top section of the outer jacket. In such heat exchangers the combustion chamber is installed over the upper sieve bottom, with the condensate accumulation bowl fixed under the lower sieve bottom.

Known from the Polish patent application published under No. P.392560 is a heat exchanger having an outer jacket which encases a system of vertical pipe elements fixed to the sieve walls on both ends, and fitted with a gas combustion chamber positioned over the upper sieve wall, as well as with perforated partitions fitted crosswise in relation to the pipe elements with the latter piercing the partitions through the openings. Moreover, the heat exchanger is fitted with fluid inlet and outlet stub pipes fixed in the side wall of the outer jacket.

The heat exchanger according to the invention, in its top section having a combustion chamber with an opening for the insertion of the burner, and a condensate accumulation bowl fitted in its bottom section, as well as vertical pipe elements for the flow of the fumes, which connect the combustion chamber with the condensate accumulation bowl and which are fixed to the upper and lower sieve bottoms of the jacket inside which the heated fluid flows, and further fitted with the fluid inlet and outlet stub pipes, and there is a partition mounted under the upper sieve bottom fitted with at least one slot for the flow of the fluid above the upper partition, is characterised in that the fluid inlet and outlet stub pipes are fixed to the lower sieve bottom. There is a pipe fixed to the upper partition so as to drain the heated fluid from above the upper partition, and the pipe being further which is connected to the fluid outlet stub pipe.

Preferably, the fluid inlet and outlet stub pipes fixed to the lower sieve bottom end outside which is achieved with inlet and outlet connection stub pipes integrally built into the flange of the condensate accumulation bowl. The flange is equipped with sockets for the elements which fix the exchanger to the casing. Additionally, the condensate accumulation bowl is fitted with sockets for the fluid temperature sensors, and one socket for the fume temperature sensor.

Preferably, the upper partition under the upper sieve bottom has a fluid flow distribution element fixed on its top surface.

Preferably, there is a densely perforated lower partition fitted over the lower sieve bottom, above the fluid inlet stub pipe so as to distribute the fluid flowing into the exchanger.

Thanks to the position of the fluid inlet and outlet stub pipes fixed to the lower sieve bottom and owing to the fact that they end outside, which is achieved with inlet and outlet connection stub pipes integrally built into the flange of the condensate accumulation bowl, as well as due to the sockets in the accumulation bowl flange for anchoring the elements fixing the exchanger to the casing it is possible to mount the hydroblock directly on the heat exchanger and achieve a very tight sealed connection between the condensate accumulation bowl and the casing. The solution according to the invention allows access to the fluid inlet and outlet stub pipes from the bottom without the need to dismount the heat exchanger.

The invention will now be described by way of example and with reference to the accompanying drawings in which:

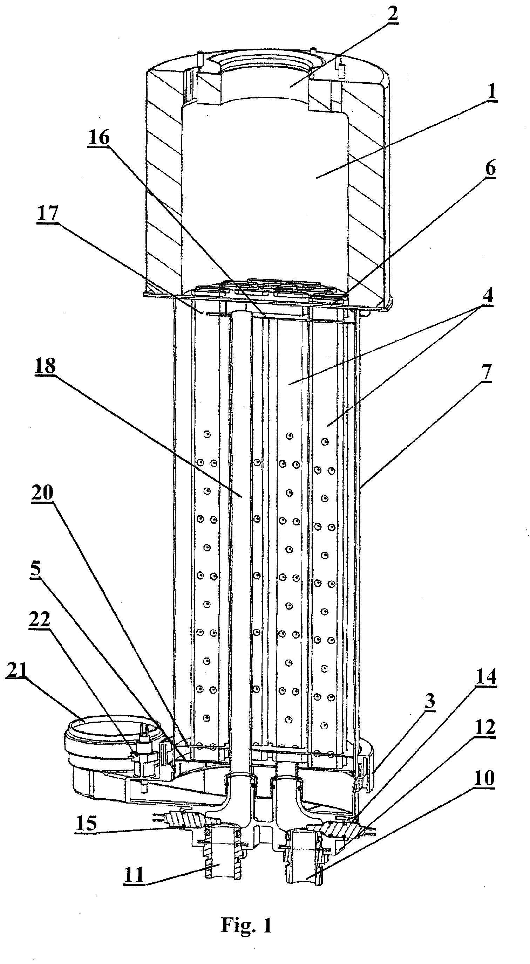

Fig. 1 presents the axial section of the heat exchanger in an axonometric projection,

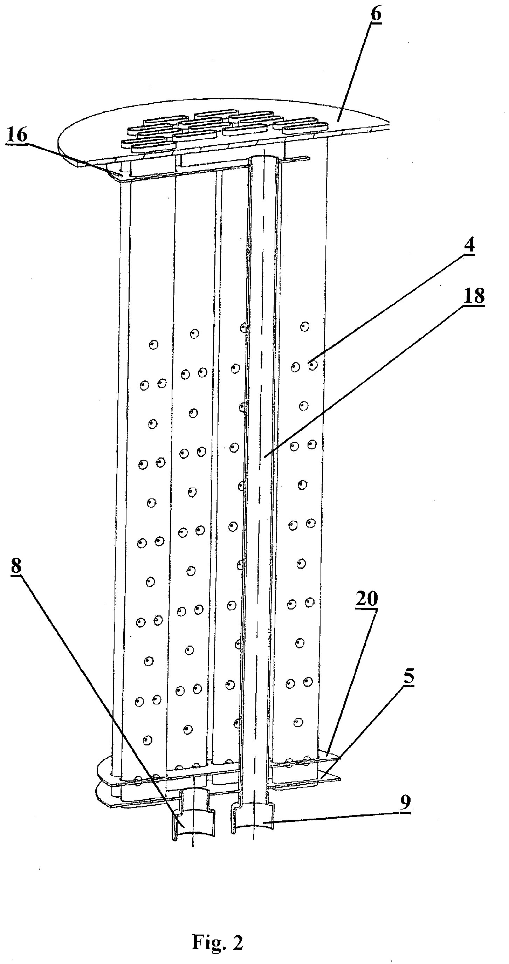

Fig. 2 - an axial section of the heat exchanger interior in an axonometric projection,

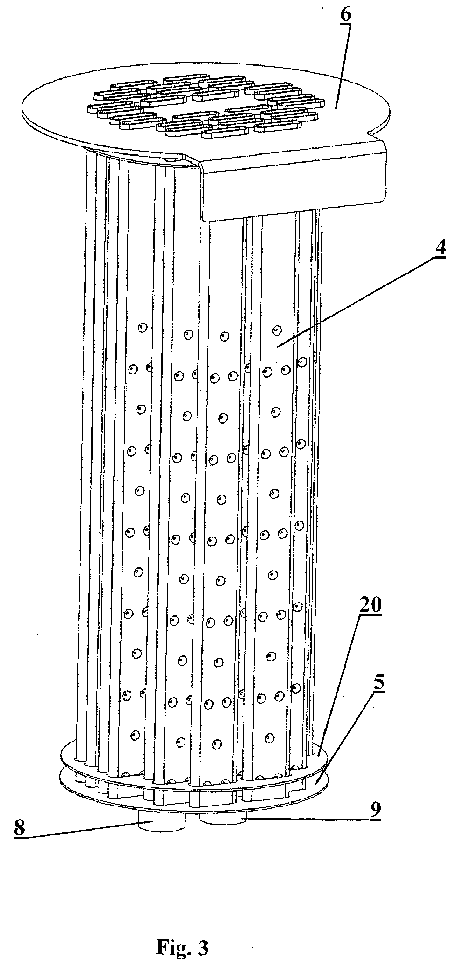

Fig. 3 - the interior of the heat exchanger in an axonometric projection,

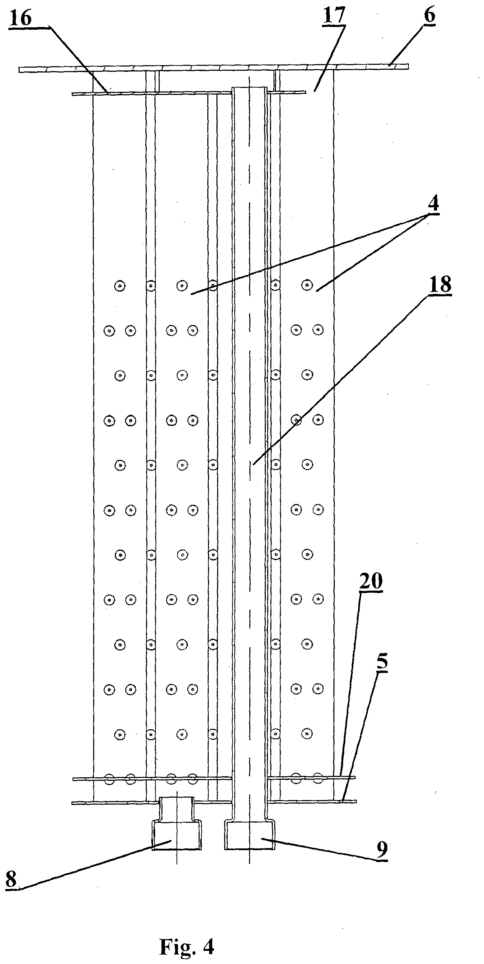

Fig. 4 - an axial section of the heat exchanger interior,

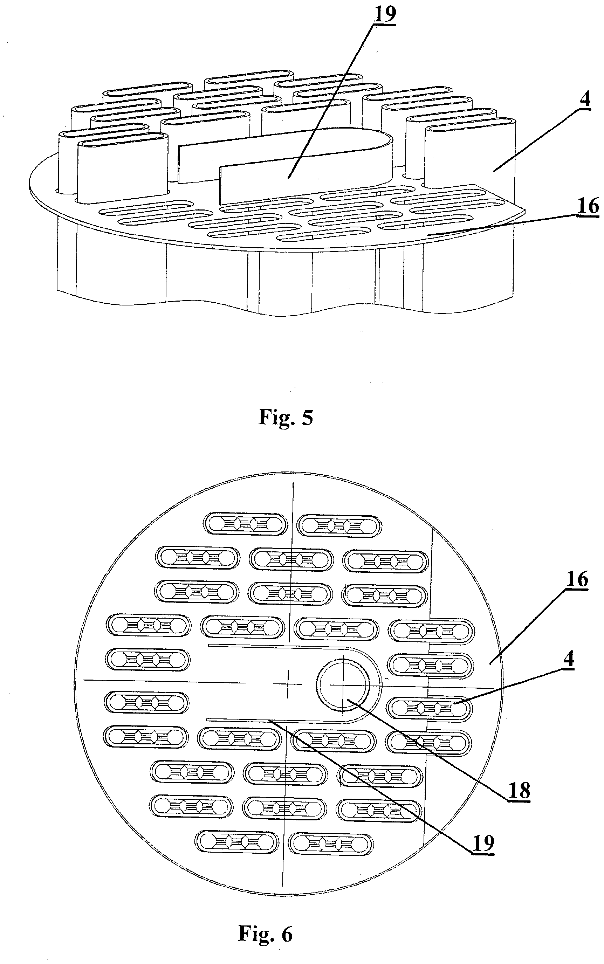

Fig. 5 - upper partition with the fluid flow distribution element in an axonometric projection,
Fig. 6 - bird's-eye view of the upper partition with the fluid flow distribution element,

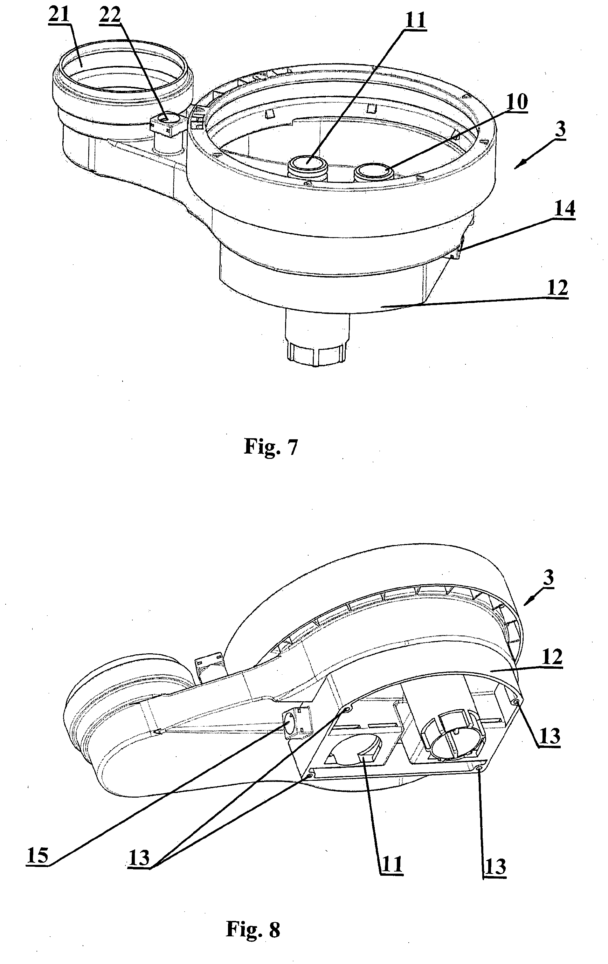

Fig. 7 and Fig. 8 - condensate accumulation bowl in an axonometric projection,

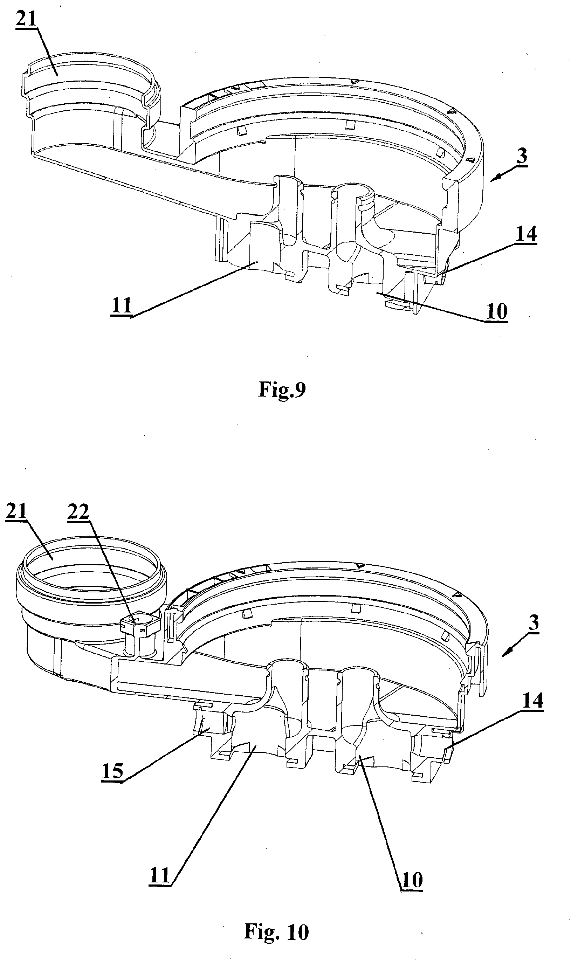

Fig. 9 and Fig. 10 - axial section of the condensate accumulation bowl in an axonometric projection.

As shown on the drawing, in the top section of the fired heat exchanger there is a thin-walled combustion chamber 1 with an opening 2 for the insertion of the burner, in its bottom section having a condensate accumulation bowl 3 and vertical pipe elements 4 for the flow of fumes, which connect the combustion chamber 1 with the condensate accumulation bowl 3 and are fixed to the lower sieve bottoms 5 and upper sieve bottoms 6 of the jacket 7 inside which the heated fluid flows. The fluid inlet stub pipe 8 and outlet stub pipe 9 are fixed to the lower sieve bottom 5 and end outside, which is achieved with the inlet connection stub pipe 10 and outlet connection stub pipe 11 integrally built into the flange 12 of the condensate accumulation bowl 3. The flange 12 is equipped with four sockets 13 for the screws fixing the heat exchanger to the casing. Moreover, the condensate accumulation bowl 3 is fitted with a socket 14 for the sensor to measure the temperature of the fluid flowing in, socket 15 for the sensor to measure the temperature of the heated fluid, socket 22 for the fume temperature sensor, and a stub pipe 21 for discharging the fumes.

Under the upper sieve bottom 6 there is a partition 16 fixed and fitted with a slot 17 for the flow of the fluid above the upper partition 16. There is a pipe 18 fixed to the upper partition 16 so as to drain the heated fluid from above the upper partition 16, connected to the fluid outlet stub pipe 9. There is a fluid flow distribution element 19 in the form of a vertical U-shaped partition fixed on the top surface of the upper partition 16, through which a pipe 18 for the discharge of the hot fluid runs.

In order to achieve even distribution of the fluid supplied to the heat exchanger there is a partition 20 fitted over the lower sieve bottom 5 above the fluid inlet stub pipe 10, where the perforations for pipe elements 4 are larger than cross sections of those elements, thanks to which the supplied water gets through the thus-formed slots and flows even around the pipe elements 4.

The fumes generated in the combustion chamber 1 flow down through the pipe elements 4 and then, through the condensate accumulation bowl 3 get into the vent via the stub pipe 21. The cold fluid is supplied through the inlet connection stub pipe 10 and the inlet stub pipe 8 connected thereto, into the space between the lower sieve bottom 5 and the lower partition 20. Then, through the slots formed around the pipe elements 4 the fluid gets into the chamber formed inside the jacket 7 and flows towards the combustion chamber I washing around pipe elements 4 on its way and absorbing the heat from the fumes. Flowing through the slot 17 in the upper partition 16, the fluid gets above the partition and flows around pipe elements 4 and the upper sieve bottom 6, absorbing the heat from the fumes, where the direction of the flow is forced by the fluid flow distribution element 19, whereupon the heated fluid flows into the pipe 18 to leave the heat exchanger via the outlet stub pipe 9 and the connection stub pipe; 11.

## Claims

1. A fired heat exchanger, in its top section having a combustion chamber (1) with an opening (2) for the insertion of the burner and in its bottom section fitted with a condensate accumulation bowl (3) and vertical pipe elements (4) for the flow of fumes, which connect the combustion chamber (1) with the condensate accumulation bowl (3), fixed to the upper and lower sieve bottoms (6, 5) of the jacket (7) inside which the heated fluid flows, and further fitted with the inlet (8) and outlet (9) stub pipes, and there is a partition (16) mounted under the upper sieve bottom (6) fitted with at least one slot (17) for the flow of the fluid above the upper partition (16), **characterized in that** the fluid inlet stub pipe (8) and outlet stub pipe (9) are fixed to the lower sieve bottom (5), where there is a pipe (18) connected to the upper partition (16) to drain the heated fluid from above the upper partition (16), and the pipe (18) being further connected to the fluid outlet stub pipe (9).

2. The fired heat exchanger according to claim 1, **characterised in that** the fluid inlet and outlet stub pipes fitted in the lower sieve bottom (6) end outside, which is achieved with inlet (10) and outlet (11) connection stub pipes integrally built into the flange (12) of the condensate accumulation bowl (3), where the flange (12) is fitted with sockets (13) for the elements which fix the exchanger to the casing.

3. The fired heat exchanger according to claims 1 or 2, **characterised in that** the condensate accumulation bowl (3) is fitted with sockets (14, 15) for the fluid temperature sensors, and a socket (22) for the fume temperature sensor.

4. The fired heat exchanger according to claim 1, **characterised in that** there is a fluid flow distribution element (19) fitted on the top surface of the upper partition (16).

5. The fired heat exchanger according to claims 1 to 4, **characterised in that** there is a densely perforated lower partition (20) fitted over the lower sieve bottom (5), above the fluid inlet stub pipe (8) for the distribution of the fluid flowing inside.

## Patentansprüche

1. Ein beheizter Wärmetauscher, ausgerüstet im oberen Bereich mit einer Verbrennungskammer (1), in der eine Bohrung (2) für die Einführung eines Brenners angeordnet ist, und im unteren Bereich mit einer Wanne (3) für das Kondenswasser und die senkrechten Rohre (4) für Abgase, die die Verbrennungskammer (1) mit der Kondensat-Wanne (3) verbinden, die im oberen und unteren Siebboden (6, 5) des Mantels (7) angeordnet sind, in dem die beheizte Flüssigkeit fließt, sowie ausgerüstet mit einem Einlauf- (8) und Auslaufstutzen (9) für die Flüssigkeit, und einer unter dem oberen Siebboden (6) angebrachten Trennwand (16), die mit wenigstens einer Spalte (17) für den Flüssigkeitdurchfluss über der Trennwand (16) versehen ist, **dadurch gekennzeichnet, dass** der Einlaufstutzen (8) und Auslaufstutzen (9) für die Flüssigkeit im unteren Siebboden (5) angeordnet sind und an der oberen Trennwand (16) ein Rohr (18) zur Abführung der erwärmten Flüssigkeit vom oberen Bereich der Trennwand (16) angeordnet ist, wobei das Rohr (18) mit dem Auslaufstutzen (9) der Flüssigkeit verbunden ist.

2. Wärmetauscher nach dem Anspruch 1, **dadurch gekennzeichnet, dass** der im unteren Siebboden (6) angeordnete Einlauf- und Auslaufstutzen für die Flüssigkeit nach außen durch einen Anschlussstutzen auslaufen, also jeweils durch einen Einlaufanschlussstutzen (10) und Auslaufanschlussstutzen (11), die mit dem Flansch (12) der Wanne (3) des Kondenswasserablaufes verbunden sind, wobei der Flansch (12) mit Anschlüssen (13) für die den Wärmetauscher mit dem Gehäuse verbindenden Elemente ausgerüstet ist.

3. Wärmetauscher nach dem Anspruch 1 oder 2, **dadurch gekennzeichnet, dass** die Wanne (3) für das Kondensat mit Anschlüssen (14, 15) für die Temperaturfühler der Flüssigkeit und mit einem Anschluss (22) für den Abgastemperaturfühler ausgerüstet ist.

4. Wärmetauscher nach dem Anspruch 1, **dadurch gekennzeichnet, dass** die obere Trennwand (16) auf der oberen Fläche ein Lenkblech (19) für den Flüssigkeitdurchfluss aufweist.

5. Wärmetauscher nach dem Anspruch 1 bis 4, **dadurch gekennzeichnet, dass** über dem unteren Siebboden (5) und über dem Auslaufstutzen (8) für die Flüssigkeit, die untere Trennwand (20) angeordnet ist, die mehrere Bohrungen (Perforierung) für die Verteilung der einfließenden Flüssigkeit aufweist.

## Revendications

1. Échangeur de chaleur ayant dans sa partie supérieure une chambre de combustion (1) munie d'une orifice (2) pour l'insertion du brûleur (2), et dans la partie inférieure une cuve (3) d'évacuation du condensat, et des tuyaux verticaux (4) pour l'écoulement des fumées reliant la chambre de combustion (1) à la cuve d'évacuation du condensat (3), montés sur le fond tamisé supérieur et inférieur (6, 5) de l'enveloppe (7), à l'intérieur duquel s'écoule le liquide chauffé, et équipé d'une tubulure d'arrivée (8) et d'évacuation (9) du liquide, et sous le fond tamisé supérieur (6) se trouve une cloison supérieure (16) munie d'au moins une fente (17) permettant le flux du liquide au-dessus de cette cloison (16), **caractérisé en ce que** les tubulures d'arrivée (8) et d'évacuation (9) du liquide sont montés sur le fond tamisé inférieur (5), et sur une cloison supérieure (16) est monté un tuyau (18) pour évacuer le liquide chaud provenant de la cloison supérieure (16), ledit tuyau étant relié à la tubulure d'évacuation (9) du liquide.

2. Échangeur selon la revendication 1, **caractérisé en ce que** les tubulures d'arrivée et d'évacuation du liquide, montées sur le fond tamisé inférieur (6), débouchent vers l'extérieur par l'intermédiaire des tubulures de raccordement, d'arrivée (10) et d'évacuation (11), intégrées à la bride (12) de la cuve (3) d'évacuation du condensat, la bride (12) étant munie de logements (13) pour éléments reliant l'échangeur au carter.

3. Échangeur selon la revendication 1 ou 2, **caractérisé en ce que** la cuve (3) d'évacuation du condensat est équipée de logements (14, 15) pour les sondes de température du liquide et de logement (22) pour la sonde de température des fumées.

4. Échangeur selon la revendication 1, **caractérisé en ce que** la cloison supérieure (16) comporte sur sa surface supérieure un volet de direction (19) du flux du liquide.

5. Échangeur selon les revendications 1 à 4, **caractérisé en ce qu'**au-dessus du fond tamisé inférieur (5) au-dessus de la tubulure d'arrivée (8) du liquide, est montée une cloison inférieure (20) munie de nombreux orifices pour la distribution du liquide entrant.
